# EUROPÄISCHE PATENTSCHRIFT

(11) **EP 0 747 411 B1**
(45) Veröffentlichungstag und Bekanntmachung des Hinweises auf die Patenterteilung: **02.05.2003**
(21) Anmeldenummer: 96108629.5
(22) Anmeldetag: 30.05.1996
(51) Int. Cl.: C08G 18/50, C08G 65/26

(54) **Verfahren zur Herstellung von Aromaten enthaltenden Polyetherpolyolen**
Process for preparing polyetherpolyols with aromatic units
Procédé pour la préparation de polyétherpolyols ayant des unités aromatiques

(30) Priorität: 09.06.1995 DE 19521058
(43) Veröffentlichungstag der Anmeldung: 11.12.1996
(73) Patentinhaber: BASF AKTIENGESELLSCHAFT, 67056 Ludwigshafen (DE)
(72) Erfinder: Dinsch, Stefan, 01993 Schipkau (DE); Pretzsch, Regina, 01987 Schwarzheide (DE); Winkler, Juergen, 01987 Schwarzheide (DE); Guettes, Bernd, 03238 Sallgast (DE); Steinchen, Karl-Heinz, 01987 Schwarzheide (DE)

(56) Entgegenhaltungen:
- EP-A- 0 256 252
- EP-A- 0 318 784
- DD-A5- 290 202
- DE-A- 2 017 038
- DE-A- 4 232 970
- US-A- 4 391 728
- US-A- 4 562 290

## Beschreibung

Die Erfindung betrifft ein Verfahren zur Herstellung von Aromaten enthaltenden Polyetherpolyolen durch Anlagerung von Alkylenoxiden an H-funktionelle Startsubstanzen, wobei als Startsubstanz ein spezielles Gemisch aus Isomeren des Toluylendiamins (TDA) eingesetzt wird, sowie nach diesem Verfahren hergestellte Polyetherpolyole und deren Verwendung als Komponente innerhalb einer Polyolmischung zur Herstellung von Polyurethan-Hartschäumen.

Die Herstellung von Polyetherolen durch Alkoxylierung von H-funktionellen Substanzen ist lange bekannt. Der Einsatz von aromatischen Diaminen, wie Isomerengemischen des TDA, speziell von 2,4-und 2,6-TDA, 2,3- und 3,4-TDA (o-TDA) und Gemischen mit höhermolekularen aromatischen Diaminen wurde ebenfalls schon beschrie-ben.

In GB-A-972 772 wird die Alkoxylierung von 2,4- und 2,6-TDA und Gemischen daraus beschrieben.

Der Einsatz von o-TDA als Startsubstanz für die Herstellung von Polyetherolen wird in der DE-C-2017038 dargelegt.

Weiterhin ist bekannt, daß die Propoxylierung von TDA-Isomeren zu hochviskosen Produkten führt, deren Handhabung sehr problematisch ) ist. Im Gegensatz dazu führt eine Ethoxylierung von TDA-Isomeren zwar zu niederviskoseren Polyetherolen, aber ihr Gehalt an ausschließlich primären OH-Gruppen führt mit Isocyanaten zu hohen Reaktionsgeschwindigkeiten. Dadurch sind sie für die meisten Hartschaumanwendungen zu aktiv.

Für die Hartschaumanwendung gut geeignete Polyetherole werden in US-A-4 209 609 beschrieben. Danach werden pro Mol TDA ca. 4 Mol Ethylenoxid und dann weiteres Propylenoxid angelagert. Der Einbau eines Ethylenoxid-Innenblocks verringert die Viskosität. Der Katalysator wird vorzugsweise erst nach der Ethoxylierung zugegeben. Diese Verfahrensweise führt beim Einsatz von KOH als Katalysator zu niedrigviskosen aber nicht reproduzierbar herstellbaren Produkten mit sehr hohen Gehalten an freien o-TDA. (1 bis 2 Gew.-%).

In DD-A-290 201 wird eine aminische Startsubstanz eingesetzt, die bei der TDA-Reinigung als Destillationsprodukt anfällt. Sie besteht aus 20 bis 50 Gew.-% TDA-Isomeren mit überwiegend 2,4- und 2,6-Isomeren und aus 50 bis 80 Gew.-% eines Schwerproduktes, das im wesentlichen aus höhermolekularen Verbindungen, wie aromatischen und cycloaromatischen Hydrazin- und TDA-Derivaten, besteht. Diese Startergemische führen zu sehr dunklen Polyetherolen.

DD-A-290 202 beschreibt die Herstellung von Polyetherolen auf Basis von Startsubstanzen, die aminhaltige Destillationskopfprodukte sind. Sie bestehen aus 10 bis 40 Gew.-% 2,3-TDA, 20 bis 50 Gew.-% 3,4-TDA, 30 bis 60 Gew.-% 2,4- und 2,6-TDA und ca. 1 Gew.-% Toluidinen. Die Alkoxylierung dieses Isomerengemisches, auch in Verbindung mit Coinitiatoren und/oder Destillationssumpfprodukten, erfolgt mit Hilfe basischer Katalysatoren, wobei teilweise Nickelkatalysatoren enthalten sind. Dies führt zu erhöhten Gehalten an sekundären Aminogruppen.

In EP-A-0 318 784 wird die Herstellung eines Polyetherols auf Basis von o-TDA beschrieben. Die Synthese des Polyetherols erfolgt dabei mit Hilfe von speziellen aminischen Katalysatoren. Die so hergestellten Produkte sollen alle bisher genannten Nachteile, wie Rißbildung und Kernverfärbungen im Schaum, nicht aufweisen. Das Herstellungsverfahren führt zu Polyetherolen einer OH-Zahl von 400 - 630 auf Basis von o-TDA, bei denen 5 bis 20 Gew.-% der gegenüber Isocyanaten reaktiven Gruppen aus sekundären Aminogruppen bestehen und deren Gehalte an freien o-TDA unter 0,2 Gew.-% liegen sollen. Die beschriebene Herstellungsweise bewirkt, daß ein erheblicher Teil der Aminogruppen nur monoalkoxyliert ist, sodaß ein größerer Anteil sekundärer Aminogruppen übrig bleibt. Dies ist offensichtlich die Ursache der niedrigen Viskosität. Diese so hergestellten Polyetherole bewirken beim Verschäumen eine erhöhte Ausgangsaktivität, die zur Verringerung der Einsatzmengen an Katalysatoren führt. Eine solche Katalysatorverminderung beim Schäumen verschlechtert jedoch die Aushärtung vieler Systeme entsprechender Anwendungen. Damit werden durch die rasche Reaktion der sekundären Aminogruppen mit Isocyanatgruppen Molmassen und Viskositäten stark erhöht und die Fließeigenschaften der Systeme, besonders in Formteilen, stark verschlechtert, so daß besonders bei größeren Formungen, wie in Kühlmöbeln, keine vollständige Füllung erfolgen kann.

DE-A-4232970 beschreibt ein Verfahren zur Herstellung von Polyetherolen mit basisch katalysierter Anlagerung von Alkylenoxiden an TDA. Das TDA besitzt einen Isomerengehalt an 2,3- und 3,4-TDA von ≥ 50 Gew.-%, bezogen auf die Gesamt-TDA-Menge, wobei der Anteil an Ethylenoxid an der gesamten Alkylenoxidmenge 5 bis 12 Gew.-% beträgt. Weiterhin wird beansprucht, daß mit steigendem Gehalt an 2,3- und 3,4-Isomeren des TDA auch der Gehalt an Ethylenoxid im Alkylenoxid ansteigt. Außerdem befinden sich im TDA-Isomerengemisch noch aromatische Monoamine in einer Menge von 5 ≤ 5 Gew.-%, bezogen auf das TDA, als Anilin und/ oder Toluidine. Die Alkoxylierung dieses Isomerengemisches mit Hilfe basischer Katalyse ergibt niederviskose Polyetherole bei Hydroxylzahlen von z. B. 410 bis 435 mg KOH/g. Konkret wird in Beispiel 1 eine Hydroxylzahl von 435 mg KOH/g bei einer Viskosität bei 25°C von nur 5100 mPa·s ausgewiesen. Dieses Produkt hat einen Gehalt an primären und sekundären Aminogruppen von 0,002 Gew.-%.

Die niedrige Viskosität von 5100 mPas (20°C) bei einer Hydroxylzahl von 435 mg KOH/g ist mit einer basischen Katalyse der Reaktion mit wäßriger Kalilauge aber nur erreichbar, wenn entweder im TDA als Startsubstanz ein wesentlich erhöhter Gehalt an Anilin oder Toluidinen vorhanden ist oder der Gehalt an primären und sekundären Aminogruppen ebenfalls wesentlich höher liegt. Das Erreichen der gewünschten niedrigen Viskosität erfolgt also über eine abgesenkte Funktionalität des Startergemisches bzw. im Polyol wie schon in EP 0318 784 dargelegt wurde. Die Absenkung der Viskosität ist außerdem über einen erhöhten Gehalt an Ethylenoxid möglich. Im Beispiel beträgt jedoch der Gehalt an Ethylenoxid nur 2,8 Gew.-%, bezogen auf die Alkylenoxidmenge. Diese Menge reicht jedoch nicht aus, die Viskosität bei einer Hydroxylzahl von 435 mg KOH/g auf 5100 mPas abzusenken. Mit der Erhöhung des Gehaltes primärer und sekundärer Aminogruppen erhöht sich jedoch auch die Gefahr von Restgehalten an freiem TDA.

Die US-A-4 562 290 beschreibt die Herstellung von Polyetherolen auf Basis von vicinalem TDA. Die Isomerenzusammensetzung beträgt ca. 90 Gew.-% 2,3- und 3,4-TDA und ca. 10 Gew.-% 2,4- und 2,6-TDA. Die Alkoxylierung wird mit einer Anlagerung von 1 bis 3 Mol Ethylenoxid bei 125°C und einer Propoxylierung von 4 bis 8 Mol Propylenoxid bei mehr als 140°C durchgeführt. Es hat sich jedoch erwiesen, daß die Alkoxylierung von vicinalem TDA bei erhöhten Temperaturen, wie sie Synthesetemperaturen von mehr als 140°C darstellen, zu dunklen bzw. bereits thermisch geschädigten Polyetherolen führen.

Auf Grund veränderter Anforderungsprofile werden jedoch immer stärker helle Polyetherole gewünscht. Die mit der hohen Temperatur stark vorangetriebene Synthese läßt die Propoxylierung vorrangig an den durch die vorherige Ethoxylierung entstandenen OH-Gruppen angreifen und bewirkt, daß ein erhöhter Anteil NH-Gruppen bestehen bleibt. Durch diese Absenkung der Funktionalität wird die verringerte Viskosität erhalten. Für viele Anwendungen ist jedoch die Funktionalität von mindestens 4 zwingend notwendig. Ein erhöhter Anteil an NH-Gruppen beeinflußt das Fließverhalten beim Ausschäumen eines Kühlschrankes negativ. Durch Reaktion der NH-Gruppen mit Isocyanatgruppen wird das Fließen 5 erschwert und die restlose Formfüllung verhindert.

Ausschließlich die Propoxylierung von vicinalem TDA beschreibt die US-A-4 391 728. Eingesetzt wird die gleiche Isomerenmixtur des TDA wie im US-A-4 562 290 sowie Polyoxyalkylenpolyether mit Äquivalentgewichten von 50 bis 300 und Funktionalitäten von 2 bis 6. Auch hier beträgt die Reaktionstemperatur bei der Propoxylierung über 140°C und führt somit zu den bei US-A-4 562 290 bereits geschilderten Nachteilen.

Aufgabe der Erfindung ist es, ein ökonomisch günstiges Verfahren zur Herstellung von Polyetherpolyolen auf Basis eines Isomerengemisches des TDA, gegebenenfalls im Gemisch mit weiteren Coinitiatoren, zu entwickeln, wobei die so hergestellten Polyetherpolyole ein vorteilhaftes Eigenschaftsprofil für eine Anwendung in Polyurethanhartschaumsystemen erfüllen sollen.

Erfindungsgemäß wird die Aufgabe dadurch gelöst, daß das Verfahren zur Herstellung von Aromaten enthaltenden Polyetherpolyolen durch Anlagerung von Alkylenoxiden an H-funktionelle Startsubstanzen in üblicher Weise so durchgeführt wird, daß für die Alkoxylierung eine Startsubstanz eingesetzt wird, welche zu mindestens 95 Gew.-% aus 2,3- und 3,4-Isomeren des TDA, zu 0,5 bis 4 Gew.-% aus 2,4- und 2,6-Isomeren des TDA und zu 0,1 bis 1,5 Gew.-% aus leichter flüchtigen Fraktionen der TDA-Herstellung, wobei sich die Anteile auf 100 Gew.-% ergänzen, besteht, wobei die Alkoxylierung in 2 definierten Stufen, einer nicht katalysierten Ethoxylierung bei einem bestimmten Molverhältnis von TDA und Ethlenoxid und einer mit 0,03 bis 0.15 Gew.-% Kaliumhydroxid katalysierten Propoxylierung, durchgeführt wird.

Gegenstand der Erfindung ist damit ein Verfahren zur Herstellung von Aromaten enthaltenden Polyetherpolyolen mit mittleren Molmassen zwischen 500 und 700 g/mol durch Anlagerung von Alkylenoxiden an H-funktionelle Startsubstanzen bei Temperaturen von 70°C bis 135°C und Drücken von 0,1 MPa bis 1,0 MPa, dadurch gekennzeichnet, daß für die Alkoxylierung eine Startsubstanz eingesetzt wird, welche zu mindestens 95 Gew.-% aus 2,3- und 3,4-Isomeren des TDA, zu 0,5 bis 4 Gew.-% aus 2,4- und 2,6-Isomeren des TDA und zu 0,1 bis 1,5 Gew.-% aus leichter flüchtigen Fraktionen der TDA-Herstellung, enthaltend Anilin und Toluidine, wobei sich die Anteile auf 100 Gew.-% ergänzen, besteht, die erste Phase der Alkoxylierung eine Ethoxylierung ist, die nicht katalysiert wird und ein Molverhältnis der Gesamtmenge des eingesetzten Toluylendiamin-Isomerengemisches zum Ethylenoxid von 1 zu 2,5 bis 1 zu 4 beinhaltet, und als zweite Phase der Alkoxylierung eine Propoxylierung im Beisein von 0,03 bis 0,15 Gew.-% Kaliumhydroxid durchgeführt wird.

Gegenstände der Erfindung sind weiterhin die nach diesem Verfahren hergestellten Aromaten enthaltenden Polyetherpolyole sowie deren Verwendung als Komponente innerhalb einer Polyolmischung zur Herstellung von Polyurethan-Hartschäumen.

Das Startergemisch für die erfindungsgemäßen Polyetherole enthält mindestens 95 Gew.-% 2,3- und 3,4-Isomeren des TDA, 0,5 bis 4 Gew.-% 2,4- und 2,6-Isomeren des TDA und 0,1 bis 1,5 Gew.-% leichter flüchtige Fraktionen der TDA-Herstellung, wobei sich die Anteile auf 100 Gew.-% ergänzen.

Die leichter flüchtigen Fraktionen der TDA-Herstellung enthalten vorzugsweise Toluidine und Anilin.

Das TDA mit der erfindungsgemäßen Zusammensetzung fällt unter anderem als Nebenprodukt bei der Herstellung von TDA mit 80 % 2,4-TDA und 20 % 2,6-TDA, dem Ausgangsprodukt für die Herstellung von Toluylendiisocyanat 80/20, einem der meistverwendeten technischen Isocyanate, an und ist geeignet, mit dem niedrigen Gehalt an 2,4- und 2,6-TDA im Gesamt-TDA solche Strukturunterschiede im Polyetherol hervorzurufen, die bei vorrangigem Einsatz der 2,3-und 3,4-Isomeren hervorragende Viskositäts- und Fließeigenschaften bewirken.

Weiterhin können dem Startgemisch übliche H-funktionelle, im allgemeinen alkoholische und/oder aminische Costarter zugesetzt werden, beispielsweise Diole wie Glykole, z.B. Ethylenglykol und/oder Propylenglykol und ihre Homologen, Triole, beispielsweise Glycerin und/oder niedere aliphatische Amine.

Die Herstellung der Polyetherpolyole erfolgt nach dem an sich bekannten Verfahren der basisch katalysierten Alkylenoxidanlagerung.

Zur Alkylenoxidanlagerung werden Ethylenoxid und Propylenoxid eingesetzt.

Das erfindungsgemäße Verfahren zur Herstellung der Aromaten enthaltenden Polyetherpolyole mit mittleren Molmassen zwischen 500 und 700 g/mol wird so durchgeführt, daß die erste Phase der Alkoxylierung eine Ethoxylierung ist, die nicht katalysiert wird, wobei ein Molverhältnis von TDA zu Ethylenoxid von 1 : 2,5 bis 1 : 4, vorzugsweise von 1 : 2,6 bis 1 : 3, eingehalten wird, womit deutlich geringere Gehalte an primären Hydroxylgruppen erzielt werden, und danach in einer gering katalysierten zweiten Phase mit einem KOH-Gehalt von 0,03 bis 0,15 Gew.-% eine Propoxylierung angeschlossen wird.

Als basische Katalysatoren kommen Alkali- und/oder Erdalkalihydroxide und/oder -carbonate, insbesondere Kaliumhydroxide, in einer Menge von 0,03 bis 0,3 Gew.-%, bezogen auf das gesamte Reaktionsgemisch, zum Einsatz.

Die Hydroxylzahlen der erfindungsgemäß hergestellten Polyetherole liegen bei dieser Verfahrensweise bei 340 - 420 mg KOH/g. Die so synthetisierten Produkte besitzen bei den genannten Hydroxylzahlen Viskositäten bei 25°C von 5000 bis 20000 mPas bei einer Funktionalität von 3,95 bis 4.

Die für die Verschäumungsreaktion wesentlichen Gehalte an primären Hydroxylgruppen liegen bei ≤ 10 %, in der Regel um 5 %, und die Gehalte an sekundären Aminogruppen sind < 0,05 %, die der primären Aminogruppen sind nicht nachweisbar.

Besonders geeignet für den Einsatz als Polyolkomponente für Schaumsysteme bei der Kühlschrankanwendung sind Polyetherole der erfindungsgemäßen Zusammensetzung des TDA-Isomerengemisches mit mittleren Molmassen zwischen 500 und 700 g/Mol, besonders jedoch zwischen 540 und 570 g/Mol.

Ein besonderer Vorteil der erfindungsgemäßen Polyetherole auf Basis des TDA-Isomerengemisches ist der sehr niedrige Gehalt an sekundären Aminogruppen, sodaß die für die Hartschaumanwendung gewünschte Funktionalität von 3,95 bis 4 für TDA gestartete Polyetherole erreicht wird.

Das TDA-Isomerengemisch der erfindungsgemäßen Zusammensetzung führt bei der Alkoxylierung zu Polyetherolen, deren Reaktivität gegenüber Isocyanatgruppen enthaltenden Reaktionspartnern auf niedrigem Niveau liegt. Es wird beobachtet, daß mit steigendem Gehalt an 2,3- und 3,4-Isomeren der Startsubstanz diese Reaktivität immer mehr abnimmt. Damit kann mit einem sehr hohen Gehalt an 2,3- und 3,4-Isomeren des TDA in der Startsubstanz, wie in der erfindungsgemäßen Zusammensetzung zutreffend, die Reaktivität des Polyetherols auf niedrigem Niveau gehalten werden. Damit ist vorteilhafterweise die Einflußmöglichkeit über Katalysatoren im Schaumsystem in hohem Maße gegeben und es werden gleichzeitig noch ausreichend niedrige Viskositäten erreicht, die eine problemlose Verarbeitung zulassen.

Die Ethoxylierung des TDA erfolgt bei Temperaturen von ca. 100 bis 130°C, die Propoxylierung mit geringer Katalyse bei ca. 110 bis 135°C wobei Drücke 0,1 bis 1,0 MPa auftreten können.

Der Alkoxylierung folgt die übliche Nachreaktion zur vollständigen Umsetzung. Bei Blockpolymeren erfolgt die bekannte Trennung durch Stickstoff. Das so entstandene Rohpolyetherpolyol wird durch Destillation, vorzugsweise unter Vakuum, von nicht umgesetztem Alkylenoxid und leichtflüchtigen Verbindungen befreit und entwässert sowie durch Säureneutralisation und anschließende Filtration vom Katalysator gereinigt. Für die Neutralisation werden bevorzugt ein- und/oder mehrwertige organische und/oder anorganische Säuren, wie beispielsweise Phosphorsäure, Salzsäure oder Schwefelsäure, CO₂ , aber auch saure Salze, Ionenaustauscher oder Erden verwendet.

Die Gehalte an freiem TDA erreichen maximal 180 ppm.

Die so erhaltenen Polyetherole können insbesondere als Ausgangsstoffe für die Herstellung von Polyurethankunststoffen, vorzugsweise Polyurethanhartschaumstoffen, verwendet werden. Dazu werden sie mit Isocyanaten und/oder isocyanatgruppenhaltigen Verbindungen und gegebenenfalls weiteren Polyolen im Beisein von Hilfsund /oder Zusatzstoffen, wie Katalysatoren und Treibmitteln, umgesetzt und verschäumt.

Als Isocyanatkomponenten kommen die üblichen Isocyanate, wie Toluylendiisocyanat, Diphenylmethandiisocyanat, Polyphenylpolymethylenpolyisocyanat, aber auch isocyanatgruppenhaltige Prepolymere oder isocyanurat- oder uretdiongruppenhaltige Isocyanate zum Einsatz.

Für die Herstellung von Polyurethan-Hartschaum wird bevorzugt Polyphenylpolymethylenpolyisocyanat eingesetzt.

Als Treibmittel werden üblicherweise leichtflüchtige, weitgehend inerte, insbesondere organische Verbindungen, beispielsweise Kohlenwasserstoffe, wie n-Pentan, n-Hexan, Cyclopentan, Cyclohexan und/oder ganz bzw. teilweise halogenierte, insbesondere chlorierte und/oder fluorierte Kohlenwasserstoffe, wie Fluortrichlormethan oder Difluordichlormethan, verwendet.

Als Katalysatoren werden vorzugsweise die üblichen aminischen Katalysatoren, z.B. Dimethylcyclohexylamin, eingesetzt.

So hergestellte Schäume besitzen, insbesondere bei Verwendung von Pentan und Cyclopentan als Treibmittel, niedrige Lambdawerte, ein ausgezeichnetes Fließverhalten, eine regelmäßige Schaumstruktur, eine optimale Aushärtung und hohe Gebrauchsdauer und -eigenschaften. Die Verarbeitung führt zu rißfreien Schäumen. Sie weisen damit ein vorteilhaftes Eigenschaftsprofil insbesondere für die Anwendung in Kühlschränken und Sandwichelementen auf.

Die Herstellung der Polyetherole auf Basis des erfindungsgemäßen TDA-Isomerengemisches wird durch nachfolgende Beispiele näher erläutert:

### Beispiel 1

In einem 1 l-Autoklaven mit Rührer, Dosiereinrichtungen, Heizung bzw. Kühlung und Druckmeßmöglichkeit wurden 122 g TDA mit einem Gehalt an 2,3- und 3,4-TDA von 96,4 Gew.-%, an 2,4- und 2,6-TDA von 3,45 Gew.-% und an leichtflüchtigen Bestandteilen von 0,15 Gew.-% mit Stickstoff beaufschlagt und mit 110 g Ethylenoxid (ca. 2,5 Mol) bei 95 - 110°C, bei einem Druck abfallend von 5,0 bis 1,0 bar, umgesetzt und 1,5 Stunden einer Nachreaktion bei 110°C unterzogen. Anschließend wurde mit Stickstoff ausgeblasen und das Reaktionsgemisch mit 1 g wäßriger Kalilauge (48 %ig) versetzt und homogenisiert. Es erfolgte die Dosierung von 328 g Propylenoxid bei 100 - 120°C, bei einem Druck abfallend von 6,0 bis 1,0 bar. Die Nachreaktionszeit betrug 2,5 Stunden bei 115°C. Das alkalische Polyetherol wurde mit Wasser hydrolysiert und mit Phosphorsäure neutralisiert. Anschließend wurde vakuumdestilliert und filtriert.

Das erhaltene Polyetherol hatte folgende Kennzahlen:

| | |
|---|---|
| Hydroxylzahl | 386 mg KOH/g |
| Viskosität bei 25°C | 5750 mPa s |
| Gehalt an prim. OH | 5 Gew.-% |
| Gehalt an sek. Aminogruppen | 0,02 Gew.-% |

### Vergleichsbeispiel 1

In einem Autoklaven gemäß Beispiel 1 wurden 122 g TDA mit einem Gehalt an 2,3- und 3,4-TDA von 88,2 Gew.-%, an 2,4 und 2,6-TDA von 11,51 Gew.-% und an leichtflüchtigen Bestandteilen von 0,29 Gew.-% eindosiert. 110 g Ethylenoxid wurden bei 125°C, bei einem Druck abfallend von 5,0 bis 1,0 bar, umgesetzt und 1,5 Stunden der Nachreaktion bei 110°C unterzogen. Anschließend wurde mit Stickstoff ausgeblasen und das Reaktionsgemische mit 1 g wäßriger Kalilauge (48 %ig) versetzt und homogenisiert. Anschließend erfolgte die Dosierung von 328 g Propylenoxid bei 145 - 150°C, bei einem Druck abfallend von 6,0 bis 1,0 bar. Die Nachreaktionszeit betrug 2,5 Stunden bei 115°C. Das alkalische Polyetherol wurde mit Wasser hydrolisiert und mit Phosphorsäure neutralisiert. Danach wurde vakuumdestilliert und filtriert.

Das erhaltene Polyetherol hatte folgende Kennzahlen:

| | |
|---|---|
| Hydroxylzahl | 382 mg KOH/g |
| Viskosität bei 25°C | 4920 mPa s |
| Gehalt an prim. OH | 7 Gew.-% |
| Gehalt an sek. Aminogruppen | 0,19 Gew.-% |

Das Produkt war im Gegensatz zu Beispiel 1 braun gefärbt.

### Beispiel 2

In einem Autoklaven analog Beispiel 1 wurden 150 g TDA mit einem Gehalt an 2,3- und 3,4-TDA von 97,6 Gew.-%, an 2,4- und 2,6-TDA von 2,29 Gew.-% und an leichtflüchtigen Bestandteilen von 0,11 Gew.-% mit Stickstoff beaufschlagt und mit 150 g Ethylenoxid (ca. 3 Mol) bei 100 - 115°C, bei einem Druck abfallend von 6,0 bis 2,0 bar, umgesetzt und 1,5 Stunden bei 110°C der Nachreaktion unterzogen. Anschließend wurde mit Stickstoff ausgeblasen und das Reaktionsgemisch mit 0,8 g Kalilauge versetzt und homogenisiert. Es folgte die Dosierung von 390 g Propylenoxid bei 105 bis 120°C, bei einem Druck abfallend von 5,0 bis 1,0 bar. Die Nachreaktionszeit betrug 3,5 Stunden bei 115°C.

Nach der Reinigung des Polyetherols wurden folgende Werte erhalten:

| | |
|---|---|
| Hydroxylzahl | 417 mg KOH/g |
| Viskosität bei 25°C | 16440 mPa s |
| Gehalt an prim. OH | 6,5 Gew.-% |
| Gehalt an sek. Aminogruppen | 0,011 Gew.-% |

### Vergleichsbeispiel 2

In einen Autoklaven analog Beispiel 1 wurden 150 g TDA mit einem Gehalt an 2,3- und 3,4-TDA von 67,9 Gew.-%, an 2,4- und 2,6-TDA von 31,26 Gew.-% und an leichtflüchtigen Bestandteilen von 0,84 Gew.-% dosiert, mit 2 g Kalilauge versetzt und homogenisiert. Bei ca. 120°C wurden nacheinander 150 g Ethylenoxid und 390 g Propylenoxid zudosiert. Die Nachreaktionszeit betrug 3,5 Stunden bei 115°C.

Nach der Reinigung des Polyetherols wurden folgende werte erhalten:

| | |
|---|---|
| Hydroxylzahl | 403 mg KOH/g |
| Viskosität bei 25°C | 13120 mPa s |
| Gehalt an prim. OH | 12,4 Gew.-% |
| Gehalt an sek. Aminogruppen | 0,24 Gew.-% |

### Beispiele 3a und 3b

In einem Autoklaven analog Beispiel 1 wurden 122 g TDA mit einem Gehalt an 2,3- und 3,4-TDA von 97,1 Gew.-% (Beispiel 3a) bzw. 95,7 Gew.-% (Beispiel 3b) mit Stickstoff beaufschlagt und mit 176 g Ethylenoxid (ca. 4 Mol) bei 95 - 115°C, bei einem Druck abfallend von 6,0 bis 1,0 bar, umgesetzt und 1,5 Stunden Nachreaktion bei 110°C durchgeführt. Anschließend wurde mit Stickstoff ausgeblasen und das Reaktionsgemisch mit 1 g Kalilauge versetzt und homogenisiert. Es erfolgte die Dosierung von 262 g Propylenoxid bei 100 bis 120°C, bei einem Druck abfallend von 6,0 bis 1,0 bar. Die Nachreaktionszeit betrug 2,5 Stunden bei 110°C.

Nach der Reinigung des Polyetherols wurden die in Tabelle 1 aufgeführten Werte erhalten.

### Vergleichsbeispiele 3a und 3b

Analog den Beispielen 3a und 3b wurden Synthesen mit TDA mit einem Gehalt an 2,3- und 3,4-TDA von 88,2 Gew.-% (Vergleichsbeispiel 3a) bzw. 67,9 Gew.-% (Vergleichsbeispiel 3b) durchgeführt.

Nach der Reinigung des Polyetherols wurden die in Tabelle 1 aufgeführten Werte erhalten.

**Tabelle 1**

| | | Bsp. 3a | Bsp. 3b | Vergl. 3a | Vergl. 3b |
|---|---|---|---|---|---|
| 2,3-/3,4-TDA-Gehalt | Gew.-% | 97,1 | 95,7 | 88,2 | 67,9 |
| 2,4-/2,6-TDA-Gehalt | Gew.-% | 2,75 | 4,13 | 11,51 | 31,26 |
| leichtflüchtige Toluidine/Anilin | Gew.-% | 0,15 | 0,17 | 0,29 | 0,84 |
| Hydroxylzahl | mg KOH/g | 344 | 350 | 346 | 351 |
| Viskos. b. 25°C | mPa s | 4400 | 4410 | 4410 | 4460 |
| Gehalt an prim. OH | % | 8,1 | 8,2 | 8,4 | 8,2 |
| Gehalt an sek. Aminogruppen | % | 0,010 | 0,009 | 0,007 | 0,011 |
| Einsatz Aminkatalysator Schaum | Tle | 102 | 100 | 96 | 91 |

Um vergleichbar reaktive Systeme zu erhalten, müssen mit steigendem 2,3- /3,4-Isomerengehalt höhere Anteile an aminischen Katalysatoren eingesetzt werden.

## Patentansprüche

1. Verfahren zur Herstellung von Aromaten enthaltenden Polyetherpolyolen mit mittleren Molmassen zwischen 500 und 700 g/mol durch Anlagerung von Alkylenoxiden an H-funktionelle Startsubstanzen bei Temperaturen von 70°C bis 135°C und Drücken von 0,1 MPa bis 1,0 MPa, **dadurch gekennzeichnet, daß** für die Alkoxylierung mindestens eine H-funktionelle Startsubstanz eingesetzt wird, welche zu mindestens 95 Gew.-% aus 2,3- und 3,4-Isomeren des Toluylendiamins, zu 0,5 bis 4 Gew.-% aus 2,4- und 2,6-Isomeren des Toluylendiamins und zu 0,1 bis 1,5 Gew.-% aus leichter flüchtigen Fraktionen der Toluylendiaminherstellung, enthaltend Anilin und Toluidine, wobei sich die Anteile auf 100 Gew.-% ergänzen, besteht, die erste Phase der Alkoxylierung eine Ethoxylierung ist, die nicht katalysiert wird und ein Molverhältnis der Gesamtmenge des eingesetzten Toluylendiamin-Isomerengemisches zum Ethylenoxid von 1 zu 2,5 bis 1 zu 4 beinhaltet, und als zweite Phase der Alkoxylierung eine Propoxylierung im Beisein von 0,03 bis 0,15 Gew.-% Kaliumhydroxid durchgeführt wird.

2. Aromaten enthaltende Polyetherpolyole mit mittleren Molmassen zwischen 500 und 700 g/mol, herstellbar durch Anlagerung von Alkylenoxiden an H-funktionelle Startsubstanzen bei Temperaturen von 70°C bis 135°C und Drücken von 0,1 MPa bis 1,0 MPa, **dadurch gekennzeichnet, daß** für die Alkoxylierung mindestens eine H-funktionelle Startsubstanz eingesetzt wird, welche zu mindestens 95 Gew.-% aus 2,3- und 3,4-Isomeren des Toluylendiamins, zu 0,5 bis 4 Gew.-% aus 2,4- und 2,6-Isomeren des Toluylendiamins und zu 0,1 bis 1,5 Gew.-% aus leichter flüchtigen Fraktionen der Toluylendiaminherstellung, enthaltend Anilin und Toluidine, wobei sich die Anteile auf 100 Gew.-% ergänzen, besteht, die erste Phase der Alkoxylierung eine Ethoxylierung ist, die nicht katalysiert wird und ein Molverhältnis der Gesamtmenge des eingesetzten Toluylendiamin-Isomerengemisches zum Ethylenoxid von 1 zu 2,5 bis 1 zu 4 beinhaltet, und als zweite Phase der Alkoxylierung eine Propoxylierung im Beisein von 0,03 bis 0,15 Gew.-% Kaliumhydroxid durchgeführt wird.

3. Aromaten enthaltende Polyetherpolyole nach Anspruch 4, **dadurch gekennzeichnet, daß** das Aromaten enthaltende Polyetherpolyol einen Gehalt von weniger als 0,05 Gew.-% nicht tertiär gebundenen Stickstoff aufweist.

4. Aromaten enthaltende Polyetherpolyole nach Anspruch 4 oder 5, **dadurch gekennzeichnet, daß** das Aromaten enthaltende Polyetherpolyol einen Gehalt von 2 bis 10 Gew.-% primärer Hydroxylgruppen aufweist.

5. Verwendung der Aromaten enthaltenden Polyetherpolyole nach einem der Ansprüche 4 bis 6 als Komponente innerhalb einer Polyolmischung zur Herstellung von Polyurethan-Hartschäumen.

## Claims

1. A process for preparing polyether polyols containing aromatic groups and having mean molar masses in the range from 500 to 700 g/mol by addition of alkylene oxides onto H-functional starter substances at from 70°C to 135°C and pressures of from 0.1 MPa to 1.0 MPa, wherein the alkoxylation is carried out using at least one H-functional starter substance which comprises at least 95% by weight of 2,3 and 3,4 isomers of toluenediamine, from 0.5 to 4% by weight of 2,4 and 2,6 isomers of toluenediamine and from 0.1 to 1.5% by weight of volatile fractions from the preparation of toluenediamine, comprising aniline and toluidines, where the proportions add up to 100% by weight, the first phase of the alkoxylation is an ethoxylation which is not catalyzed and in which the molar ratio of the total amount of the toluenediamine isomer mixture used to ethylene oxide is from 1:2.5 to 1:4, and a propoxylation in the presence of from 0.03 to 0.15% by weight of potassium hydroxide is carried out as second phase of the alkoxylation.

2. A polyether polyol containing aromatic groups and having a mean molar mass in the range from 500 to 700 g/mol which can be prepared by addition of alkylene oxides onto H-functional starter substances at from 70°C to 135°C and pressures of from 0.1 MPa to 1.0 MPa, wherein the alkoxylation is carried out using at least one H-functional starter substance which comprises at least 95% by weight of 2,3 and 3,4 isomers of toluenediamine, from 0.5 to 4% by weight of 2,4 and 2,6 isomers of toluenediamine and from 0.1 to 1.5% by weight of volatile fractions from the preparation of toluenediamine, comprising aniline and toluidines, where the proportions add up to 100% by weight, the first phase of the alkoxylation is an ethoxylation which is not catalyzed and in which the molar ratio of the total amount of the toluenediamine isomer mixture used to ethylene oxide is from 1:2.5 to 1:4, and a propoxylation in the presence of from 0.03 to 0.15% by weight of potassium hydroxide is carried out as second phase of the alkoxylation.

3. A polyether polyol containing aromatic groups as claimed in claim 4 which contains less than 0.05% by weight of nitrogen which is not tertiary nitrogen.

4. A polyether polyol containing aromatic groups as claimed in claim 4 or 5 which contains from 2 to 10% by weight of primary hydroxyl groups.

5. The use of a polyether polyol containing aromatic groups as claimed in any of claims 4 to 6 as component in a polyol mixture for producing rigid polyurethane foams.

## Revendications

1. Procédé pour la préparation de polyétherpolyols contenant des aromatiques, présentant des masses molaires moyennes entre 500 et 700 g/mole par addition d'oxydes d'alkylène sur des substances de départ à fonctionnalité H à des températures de 70°C à 135°C et des pressions de 0,1 MPa à 1,0 MPa, **caractérisé en ce qu'**on utilise pour l'alcoxylation au moins une substance de départ à fonctionnalité H qui est constituée à raison d'au moins 95 % en poids d'isomères 2,3 et 3,4 de la toluylènediamine, de 0,5 à 4 % en poids d'isomères 2,4 et 2,6 de la toluylènediamine et de 0,1 à 1,5 % en poids de fractions volatiles légères de la préparation de la toluylènediamine, contenant de l'aniline et de la toluidine, les proportions formant 100 % en poids, la première phase de l'alcoxylation est une éthoxylation, qui n'est pas catalysée et comprend un rapport molaire de la quantité totale du mélange utilisé d'isomères de la toluylènediamine à oxyde d'éthylène de 1:2,5 à 1:4 et on réalise comme deuxième phase de l'alcoxylation une propoxylation en présence de 0,03 à 0,15 % en poids d'hydroxyde de potassium.

2. Polyétherpolyols contenant des aromatiques, présentant des masses molaires moyennes entre 500 et 700 g/mole, pouvant être préparés par addition d'oxydes d'alkylène sur des substances de départ à fonctionnalité H à des températures de 70°C à 135°C et des pressions de 0,1 MPa à 1,0 MPa, **caractérisés en ce qu'**on utilise pour l'alcoxylation au moins -une-substance de départ à fonctionnalité H qui est constituée d'au moins 95 % en poids d'isomères 2,3 et 3,4 de la toluylènediamine, de 0,5 à 4 % en poids d'isomères 2,4 et 2,6 de la toluylènediamine et de 0,1 à 1,5 % en poids de fractions plus volatiles de la préparation de la toluylènediamine, contenant de l'aniline et de la toluidine, les proportions formant 100 % en poids, la première phase de l'alcoxylation est une éthoxylation, qui n'est pas catalysée et comprend un rapport molaire de la quantité totale du mélange utilisé d'isomères de la toluylènediamine à oxyde d'éthylène de 1:2,5 à 1:4 et on réalise comme deuxième phase de l'alcoxylation une propoxylation en présence de 0,03 à 0,15 % en poids d'hydroxyde de potassium.

3. Polyétherpolyols contenant des aromatiques selon la revendication 4, **caractérisés en ce que** le polyétherpolyol contenant des aromatiques présente une teneur inférieure à 0,05 % en poids d'azote qui n'est pas lié de manière tertiaire.

4. Polyétherpolyols contenant des aromatiques selon la revendication 4 ou 5, **caractérisés en ce que** le polyétherpolyol contenant des aromatiques présente une teneur de 2 à 10 % en poids de groupes hydroxyle primaires.

5. Utilisation des polyétherpolyols contenant des aromatiques selon l'une quelconque des revendications 4 à 6 comme composant dans un mélange de polyols pour la préparation de mousses rigides de polyuréthane.
